Europäisches Patentamt

European Patent Office

Office européen des brevets

(11) Veröffentlichungsnummer: **0 365 794**

**A1**

## (12) EUROPÄISCHE PATENTANMELDUNG

(21) Anmeldenummer: 89116301.6

(22) Anmeldetag: 04.09.89

(51) Int. Cl.⁵: **B60K 17/346 , F16D 13/74**

Die Bezeichnung der Erfindung wurde geändert (Richtlinien für die Prüfung im EPA, A-III, 7.3).

(30) Priorität: 15.10.88 DE 3835223

(43) Veröffentlichungstag der Anmeldung:
02.05.90 Patentblatt 90/18

(84) Benannte Vertragsstaaten:
DE ES FR GB IT NL SE

(71) Anmelder: **Dr.Ing.h.c. F. Porsche Aktiengesellschaft
Porschestrasse 42
D-7000 Stuttgart 40(DE)**

(72) Erfinder: **Müller, Robert, Dipl.-Ing.
Badstrasse 21
D-7251 Mönsheim(DE)**
Erfinder: **Weller, Gerhard, Dipl.-Ing.
Suedmaehrer Strasse 21
D-7133 Maulbronn(DE)**

(54) **Kupplung für das Verteilergetriebe eines Kraftfahrzeugs.**

(57) Im Antriebsstrang eines Kraftfahrzeugs ist ein Sperrsystem aus einem Differentialgetriebe und einem an ihm reibschlüssig andrückbaren Lamellenpaket angeordnet. Das Sperrsystem ist entweder im Längsstrang als Allradantrieb oder an der Hinterachse als Quersperre angeordnet. Um eine reichliche Ölschmierung des Lamellenpakets (8) sicherzustellen, weisen alle Lamellen zueinander fluchtende Axialbohrungen (34) auf.

FIG.2

Xerox Copy Centre

EP 0 365 794 A1

## Getriebeanordnung für ein Kraftfahrzeug

Die Erfindung betrifft eine Getriebeanordnung im Antriebsstrang eines Kraftfahrzeugs nach dem Oberbegriff des Anspruchs 1.

Eine ähnliche Getriebeanordnung ist in DE-PS 32 12 495 beschrieben. Von einem Gangschaltgetriebe ist ein Planetenrad-Verteilergetriebe über eine Eingangswelle angetrieben. Koaxial zur Eingangswelle liegt eine Ausgangswelle zur Hinterachse, die ständig angetrieben ist. Wird über eine Einrückkupplung eine am Verteilergetriebe angreifende Lamellenbremse betätigt, so wird die zweite Ausgangswelle, die zur Eingangswelle parallel liegt, zugeschaltet. Zur Bewegungsübertragung auf die zweite Ausgangswelle dient ein Kettentrieb.

Aus EP-A 0 216 318 ist ein Allradantrieb bekannt, dessen Sperrsystem aus einem Planetengetriebe und einem an seinem Planetenträger reibschlüssig andrückbaren Lamellenpaket besteht. Die als Hohlwelle ausgebildete erste Ausgangswelle des Sperrsystems liegt konzentrisch zur Eingangswelle; zu ihr koaxial liegt die zweite Ausgangswelle. Die Eingangswelle und die beiden Ausgangswellen sind in Lagern eines feststehenden Gehäuses gelagert.

Es ist die Aufgabe der Erfindung eine ausreichende Ölschmierung aller Lamellen zu gewährleisten.

Zur Lösung dieser Aufgabe dienen die kennzeichnenden Merkmale des Anspruchs 1. Wenn alle Lamellen zueinander fluchtende Axialbohrungen aufweisen, kann reichlich Schmieröl ins Innere des Lamellenpakets eindringen. In bevorzugter Ausgestaltung der Erfindung sind das Differentialgetriebe und das Lamellenpaket in einem umlaufenden, zylindrischen Sperrengehäuse angeordnet, dessen Mantelteil im Bereich des Lamellenpakets mehrere radiale Durchbrechungen aufweist. Die durch das umlaufende Sperrengehäuse erzeugte Zentrifugalkraft erzwingt eine Schmieröldurchströmung des Lamellenpakets auch in radialer Richtung, wobei das Schmieröl aus den radialen Durchbrechungen des Sperrengehäuses austritt. Eine derartige Getriebeanordnung kann sowohl im Längsstrang des Kraftfahrzeugs vorgesehen sein und als Allradantrieb dienen als auch an der Hinterachse des Kraftfahrzeugs liegen und als Quersperre verwendet werden. Im letzteren Fall wird als Differentialgetriebe bevorzugt ein Kegelradgetriebe benutzt, wie es in ähnlicher Form aus DE-PS 32 12 495 bekannt ist.

Ein Ausführungsbeispiel der Erfindung ist in der Zeichnung dargestellt und wird nachfolgend erläutert.

Es zeigt:

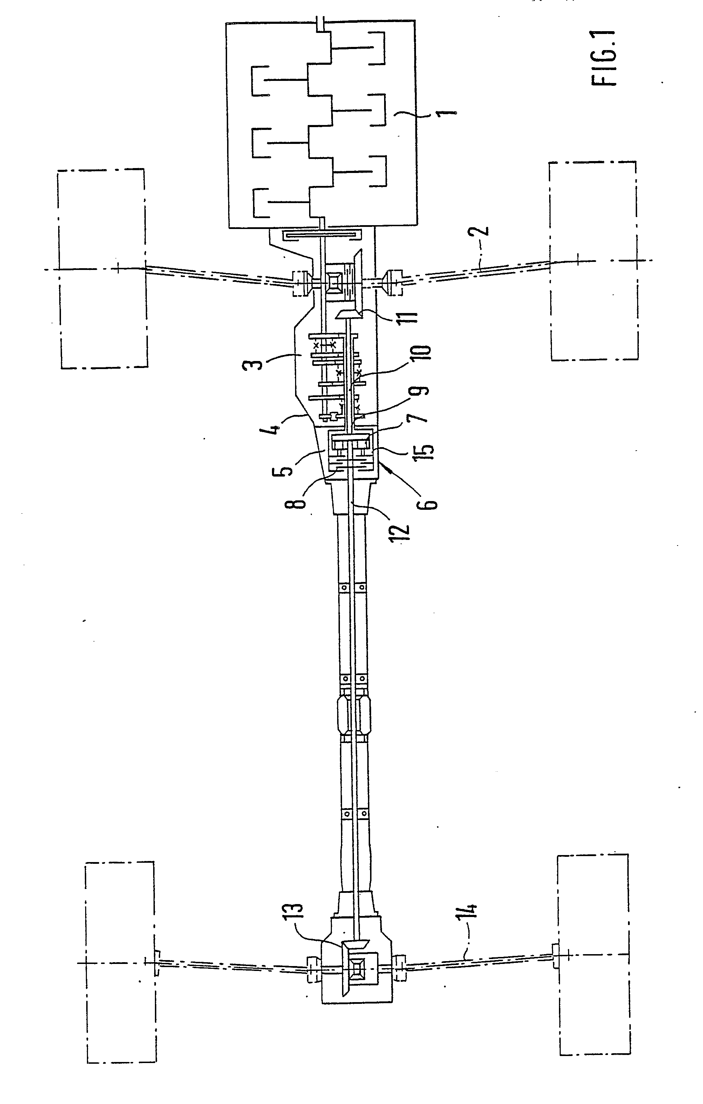

Fig. 1 schematische Darstellung eines Allradantriebs eines Kraftfahrzeugs,

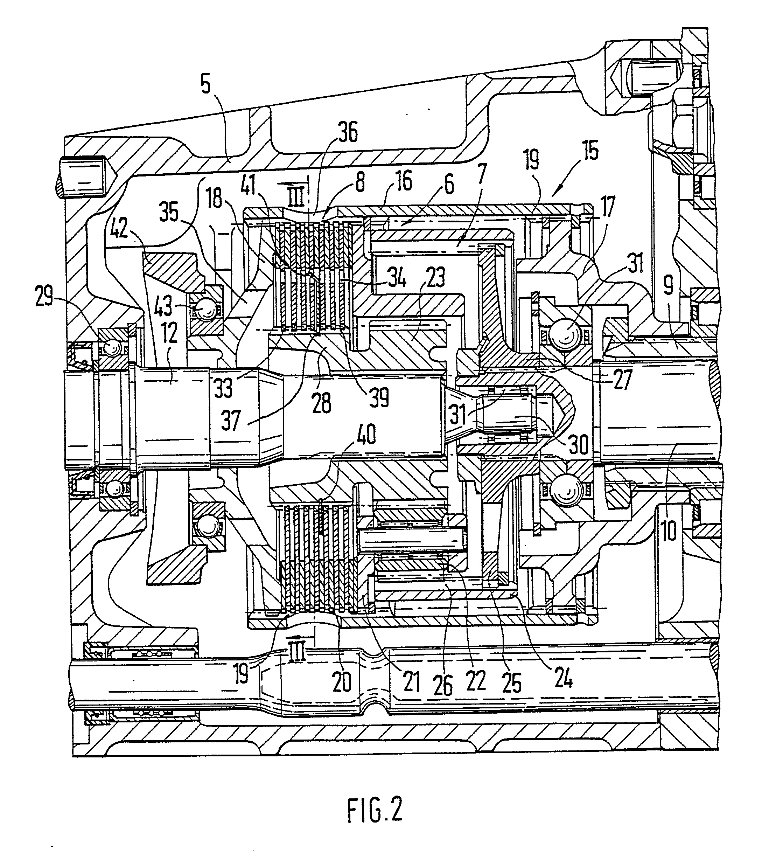

Fig. 2 Längsschnitt durch ein Allrad-Sperrsystem,

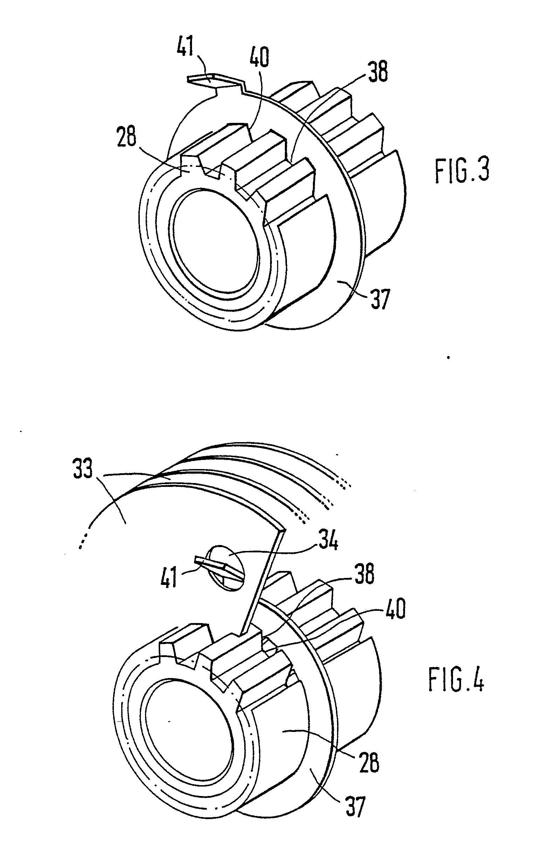

Fig. 3 Querschnitt nach Linie III-III der Fig. 2 - 1. Montagebild

Fig. 4 Querschnitt nach Linie III-III der Fig. 2 - 2. Montagebild

Im Heck eines Kraftfahrzeugs ist ein Verbrennungsmotor 1 angeordnet, und treibt ein im Bereich der Hinterachse 2 liegendes Gangschaltgetriebe 3 an, dessen Getriebegehäuses 4 am Motorgehäuse angeflanscht ist. In einer am Getriebegehäuse 4 angeschraubten Gehäusekappe 5 ist ein Allradsperrsystem 6 untergebracht, das aus einem Planetenrad-Verteilergetriebe 7 und einem Lamellenpaket 8 besteht. Eine als Hohlwelle ausgebildete Abtriebswelle des Gangschaltgetriebes 2 dient als Eingangswelle 9 des Sperrsystems 6. Eine konzentrisch durch sie hindurchgehende erste Ausgangswelle 10 geht vom Sperrsystem 6 ab und führt zu einem Kegelrad-Tellerrad-Winkeltrieb 11 der Hinterachse 2. Eine zweite Ausgangswelle 12 treibt einen Kegelrad-Tellerrad-Winkeltrieb 13 der Vorderachse 14 an.

Das Planetenrad-Verteilergetriebe 7 und das Lamellenpaket 8 sind von einem Sperrengehäuse 15 eng umschlossen. Es ist aus einem außen glatten zylindrischen Mantelteil 16, einem in ihm befestigten Lagerdeckel 17 und einer an seiner anderen Seite drehfesten und längsbeweglichen Druckplatte 18 zusammengesetzt. Der Lagerdeckel 17 und die Druckplatte 18 greifen in eine Innenverzahnung 19 des Mantelteils 16 ein, in der auch die Außenlamellen 20 und der Planetenträger 21 drehfest gehalten sind. Da der Lagerdeckel 17 auf der hohlen Eingangswellee 9 befestigt ist, wird ihre Drehbewegung über das Sperrengehäuse 15 auf den Planetenträger 21 und von den mit ihm umlaufenden Planetenrädern 22 einerseits auf das Sonnenrad 23, andererseits auf das Hohlrad 24 übertragen. Das Hohlrad 24 steht in Drehverbindung mit der zur Hinterachse 2 führenden ersten Ausgangswelle 10 über eine Kupplungsplatte 25, die mit ihrem Außenrand in der Verzahnung 26 des Hohlrades gehalten ist und mit ihrer Nabe 27 auf einer Kerbverzahnung der ersten Ausgangswelle 10 befestigt ist.

Das Sonnenrad 23 ist mit einer die Innenlamellen 33 tragenden Kupplungshülse 28 als einstückiges Bauteil gestaltet und auf einer Kerbverzahnung der die Vorderachse 14 des Kraftfahrzeugs antreibenden zweiten Ausgangswelle 12 drehfest gehalten. Die zweite Ausgangswelle 12 ist an ihrer einen Seite an einem Kugellager 29 der Gehäusekappe 5, an ihrer anderen Seite mit einem zentrischen Zapfen 30 in einem Nadellager 31 der ersten Ausgangswelle 10 gelagert. Die erste Ausgangswelle 10 ist endseitig in einen im Lagerdeckel 17 gehaltenen Vierpunktlager 32 gelagert. Mit diesem Vierpunktlager 32 werden die von dem Winkeltrieb 11 augehenden Axialkräfte auf die erste Ausgangswelle 10 abgestützt. Eine axiale Verschiebung der ersten Ausgangswelle 10 gegenüber der Eingangswelle 9 wird verhindert.

Um eine ausreichende Ölschmierung des Lamellenpakets 8 zu gewährleisten, sind alle Innenlamellen 33 und Außenlamellen 20 mit durchgehenden, zueinander fluchtenden Axialbohrungen 34 versehen. Da auch die Druckplatte 18 mehrere Axialbohrungen 35 aufweist, kann Schmieröl durch die Axialbohrungen 35 und 34 hindurch in das Lamellenpaket eindringen. Begünstigt wird der Ölfluß durch radiale Durchbrüche 36, die im Bereich des Lamellenpakets 8 im Mantelteil 16 angebracht sind und bei umlaufendem Sperrengehäuse 15 einen durch Fliehkraft bedingten radialen Ölausfluß in die Gehäuseklappe 5 ermöglichen.

Zur axialen Fixierung des Sonnenrades 23 und der Kupplungshülse 28 auf der zweiten Ausgangswelle 12 dient eine Arretierscheibe 37. Zur Montage wird sie mit ihrer Innenverzahnung 38 zwischen der Außenverzahnung 39 der Kupplungshülse 28 bis zu einer Ringnut 40 hindurchgeschoben, sodann in der Ringnut 40 so verdreht, daß die Zähne der Kupplungsscheibe 28 bündig zu den Zähnen der Arretierscheibe 37 stehen. In dieser Lage wird ihr umgebördelter Außenrand 41 in eine Axialbohrung 34 einer mittleren Lamelle eingehängt.

Die Übersetzungen im Planetenrad-Verteilergetriebe 7 sind so gewählt, daß sich eine Antriebsmomentverteilung Vorderachse/Hinterachse von 31/69 ergibt. Wird eine bestimmte Schlupfdifferenz der Vorderachse 14 zur Hinterachse 2 erreicht, so wird hydraulisch über einen Einrückhebel 42 und ein auf der Druckplatte 18 zentriertes Einrücklager 43 das Lamellenpaket 8 zusammengedrückt und an den Planetenträger 21 reibschlüssig angelegt, so daß das Planetenrad-Verteilergetriebe 7 schlupfabhängig gesperrt wird. Somit wird das Antriebsmoment von der Achse mit dem höheren Schlupf auf die andere Achse umverteilt.

## Ansprüche

1. Getriebeanordnung im Antriebsstrang eines Kraftfahrzeugs, mit einem Sperrsystem, das aus einem Differentialgetriebe und einem an ihm reibschlüssig andrückbaren, in Schmieröl laufenden Lamellenpaket aus Innenlamellen und Außenlamellen besteht, dadurch gekennzeichnet, daß die Innenlamellen (33) und Außenlamellen (20) durchgehende, zueinander fluchtende Axialbohrungen (34) aufweisen.

2. Getriebeanordnung nach Anspruch 1, dadurch gekennzeichnet, daß das Sperrsystem (6) von einem ölgefüllten, zylindrischen umlaufenden Sperrengehäuse (15) mit geringem radialen und axialen Abstand umschlossen ist.

3. Getriebeanordnung nach Anspruch 1 und 2, dadurch gekennzeichnet, daß das Sperrengehäuse (15) im Bereich des Lamellenpakets (8) mehrere radiale Durchbrüche (36) zum Durchleiten von Schmieröl enthält.

4. Getriebeanordnung nach Anspruch 1, dadurch gekennzeichnet, daß die Axialbohrungen (34) ölleitend mit axialen Durchbrechungen (Axialbohrungen 35) einer Druckplatte (18) verbunden sind, die stirnseitig am Sperrengehäuse (15) angeordnet ist und mit der das Lamellenpaket (8) zusammendrückbar ist.

FIG.1

FIG.2

FIG.3

FIG.4

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 617 074 (LUCAS) <br> * Spalte 4, Zeilen 31-38; Spalte 4, Zeilen 64-66; Figur 1 * <br> --- | 1,2 | B 60 K 17/346 <br> F 16 D 13/74 |
| Y,D | EP-A-0 216 318 (OPEL) <br> * Seite 15, Zeile 29 - Seite 17, Zeile 6; Figuren 1,2 * <br> --- | 1-4 | |
| Y | CH-A- 534 318 (SAURER) <br> * Spalte 5, Zeile 32 - Spalte 6, Zeile 8; Figuren * <br> --- | 1-4 | |
| A | DE-A-2 331 315 (VOITH) <br> * Seite 4, Absätze 2,3; Figur 1 * <br> --- | 1-3 | |
| A | US-A-3 823 802 (WINZELER et al.) <br> * Spalte 3, Zeilen 34-45 * <br> ----- | 2,3 | |

| | |
|---|---|
| | **RECHERCHIERTE SACHGEBIETE (Int. Cl.5)** <br><br> B 60 K <br> F 16 D <br> F 16 H |

Der vorliegende Recherchenbericht wurde für alle Patentansprüche erstellt

| Recherchenort | Abschlußdatum der Recherche | Prüfer |
|---|---|---|
| DEN HAAG | 18-12-1989 | MENDE H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)